# EUROPÄISCHE PATENTANMELDUNG

(11) **EP 1 914 344 A1**
(43) Veröffentlichungstag der Anmeldung: **23.04.2008**
(21) Anmeldenummer: 07020383.1
(22) Anmeldetag: 18.10.2007
(51) Int. Cl.: D21B 1/06, A01F 29/00

(54) **Pressballenauflösemaschine**

(30) Priorität: 18.10.2006 AT 75206 U
(71) Anmelder: Isocell Vertriebsges.m.b.H., 5202 Neumarkt am Wallersee (AT)
(72) Erfinder: Spitaler, Anton, 5204 Strasswalchen (AT)
(74) Vertreter: Dupal, Helmut

(57) **Zusammenfassung**

Pressballenauflösemaschine mit einer Auflöseeinrichtung (1), mit Abtrageelementen, einer Aufnahmeeinrichtung (2) mit Haltewerkzeugen (26) für einen Pressballen (4) und einer dazwischen angeordneten Zuführungseinrichtung (3) mit einer Auflagefläche (23) als Förderbahn für die liegende Förderung des Pressballens (4), bei der die Auflöseeinrichtung (1) den stirnseitigen Querschnitt des Pressballens (4) überdeckend, im wesentlichen aus angetriebenen Abtrageelementen gebildet wird, gegen die jeweils der von den Haltewerkzeugen (6) der Aufnahmeeinrichtung (2) erfasste Pressballen (4) auf der Zuführungseinrichtung (3) zugestellt wird.

## Beschreibung

Die Erfindung betrifft eine Pressballenauflösemaschine mit den Merkmalen des Oberbegriffes des Anspruches 1.

Ähnliche Einrichtungen dieser Art sind aus der Landtechnik für die Auflösung von Wickel- und Pressballen aus Heu oder Stroh oder zur Auflösung von Silageblöcken bekannt.
Bei diesen Einrichtungen erfolgt die Aufnahme der Pressballen mit einer gesonderten Beladevorrichtung mit Haltewerkzeugen, wie Ballenzangen.

Der Transport zu den Abtrageelementen geschieht gewöhnlich mit einem Kratzboden, dessen Transportfläche die Förderbahn bildet.
Die Abtrageelemente bestehen aus einer oder zumeist aus mehreren übereinander angeordneten und gleichsinnig angetriebenen zylindrischen Walzen mit Abtragewerkzeugen unterschiedlicher Art, die das Fasergut in einen Abwurfkanal für die weitere Handhabung, etwa in der Tierbetreuung, abgeben.

Solche Einrichtung sind für die Auflösung Fasergut, meistens bestehend aus gepressten Papierflocken, zur Herstellung von Dämmmaterial verwendet worden, aber wenig geeignet, weil dieses Material bereits zu wesentlich feineren Fasern aufgeschlossen ist und beim Abtragen aus einem Pressballen sehr stark zum Zusammenballen zu kleineren Bällchen neigt, die dabei wieder verdichten und keine hinreichend gleichmäßige lockere Faserstruktur bilden.
Diese gleichmäßige lockere Faserstruktur ist aber für die Weiterförderung beim pneumatischen Befüllen von Baustrukturen und für die Herstellung von leistungsfähigen Dämmschichten wichtig.

Aufgabe der Erfindung ist es eine Einrichtung zu schaffen mit der, bei vergleichsweise niedrigen maschinellen Aufwand, die Aufnahme Förderung und Auflösung von Pressballen aus Papierflocken, mit hoher Leistung und hoher Qualität hinsichtlich Auflockerung und gleichmäßiger Faserstruktur, ermöglicht wird, wobei diese Einrichtung leicht transportierbar sein soll.

Diese Aufgabe wird bei einer Einrichtung der eingangs genannten Art, nach dem Oberbegriff des Anspruches 1, mit den Merkmalen des kennzeichnenden Teiles des Anspruches 1 gelöst.
Die Unteransprüche betreffen besonders vorteilhafte Ausgestaltungen der Erfindung und bilden ebenso wie Anspruch 1 gleichzeitig einen Teil der Beschreibung der Erfindung.

Die Verwendung eines Pressballens auf einer Palette stehend, ist für die Verarbeitung besonders vereinfachend, wobei es für die gleichmäßige Qualität des aufgelösten Fasermaterials für die Bearbeitung mit der Auflöseeinrichtung erforderlich ist, dass der stirnseitige Querschnitt des Pressballens von den angetriebenen Abtrageelementen überdeckt wird und beim Abtragevorgang von den Haltewerkzeugen einer Aufnahmeeinrichtung erfasst und gehalten ist und von der Zuführungseinrichtung mit der für die Auflösung günstigen Geschwindigkeit zugestellt wird, die je nach dem verarbeiteten Fasermaterial eingestellt wird.

Dabei ist es möglich, als Abtrageelement eine Zylinderwalze mit großem Durchmesser, mit Kratzwerkzeugen bestückt, die über die Stirnfläche eines Pressballens reicht oder mehrere derartige Zylinderwalzen mit geringeren Duchmesser zu verwenden.
Es können auch eine oder mehrere Schnecken mit entsprechend gewähltem Durchmesser verwendet werden, bei denen die Kratzwerkzeuge an den Rändern der Schneckenflächen angebracht sind.

Von allen diesen Anordnungen als Auflöseeinrichtung hat keine Ergebnisse hinsichtlich Leistung, Aufschließung des Fasergutes und Gleichmäßigkeit des aufgelösten Fasergutes erreicht werden die gleichermaßen befriedigend sind wie die bei Verwendung von Kratzwellen, die nachstehend behandelt werden.

Als sehr geeignet haben sich Abtrageelemente der Auflöseeinrichtung erwiesen, die aus mehreren, in Abständen übereinander, waagerecht und parallel zueinander angebrachten gleichsinnig angetriebenen Kratzwellen bestehen, die das Fasergut vom Pressballen abtrennen und direkt nach unten fördernd in einen Austragskanal abwerfen. Es kann zwar auch eine Kratzwelle großen Durchmessers angewandt werden, doch haben sich drei Kratzwellen geringeren Durchmessers besonders gut bewährt, die hinsichtlich Auflösungsleistung und Auflockerung des Fasergutes die günstigsten Ergebnisse bringen.

Für eine einwandfreie Abtragung und Auflösung des Fasergutes ist es von Vorteil, wenn die Kratzwerkzeuge einander, mit den Außenbereichen ihrer Umfangsbahnen, in Radialrichtung, zumindest in etwa über den Bereich der Zähne überdecken.

Weiters ist es notwendig, die Kratzwerkzeuge im wesentlichen gleichmäßig über die Abtrageelemente zu verteilen, damit ein gleichmäßiger Abtrag des Fasergutes und eine gute Auflösung erreicht wird.

Für die gewünschte schonende Auflösung des gepressten Fasergutes haben sich Kratzwerkzeuge bewährt, die in Achsrichtung nacheinander in regelmäßigen Versatzschritten in Drehrichtung angeordnet sind, wodurch auch eine berührungsfreie Überdeckung der Kratzwerkzeuge möglich ist.
Besonders günstig hinsichtlich Arbeitsergebnis und Werkzeugaufwand sind Versatzschritte von etwa 45 Winkelgraden.

Für die Gleichmäßigkeit des Abtrages des Fasergutes ist es notwendig, dass die Kratzwerkzeuge jeder Kratzwelle wenigstens einen vollständigen Wendelgang um diese über deren Länge beschreiben, wobei dann acht oder neun Kratzwerkzeuge den Wendelgang bilden.

Für eine gleichmäßige Auflösung wird verbessert, wenn benachbarte Kratzwerkzeuge einer Kratzwelle in Achsrichtung gesehen, nach außen zu etwa aneinander anschließend, aber nicht überdeckend angeordnet sind.

Um Randgängigkeit und damit eine schlechtere Förderung des aufgelösten Fasergutes im Bereich der Seitenwände zu vermeiden, sind die Kratzwerkzeuge einer jeden Kratzwelle, von beiden Seitenwänden zur Mitte hin um einen Winkel zur Wellenachse angestellt, der sich zur Mitte hin öffnet und zwischen 5 und 10 Grade beträgt, wodurch das Fasergut leicht zur Mitte hin gedrängt wird, ohne zusammengedrückt zu werden.

Am Besten hinsichtlich der erwünschten Eigenschaften haben sich Kratzwerkzeuge erwiesen, die zu ihrer Wurzel hin sich schwach verjüngend, günstigerweise bis auf etwa die Hälfte der Breite und mit mehreren, außen abgestumpften, im Verhältnis zur Länge der Kratzwerkzeuge kurzen, sich schwach verjüngenden Zähnen versehen sind, zwischen denen sich nach innen zu abgestumpfte oder ausgerundete Ausnehmungen befinden.
Drei Zähne haben sich als ausreichend herausgestellt und arbeiten einwandfrei.

Für die Abtrageleistung und die Auflösequalität der Kratzwerkzeuge ist es günstig, wenn diese über ihre Länge an einer mittigen Längskante unter einem Winkel von etwa 10 bis 45 Grad, in Drehrichtung der Kratzwelle konkav abgewinkelt oder gebogen sind.

Die Zuführungseinrichtung für jeweils einen Pressballen besteht aus einem Kettenförderer mit beiderseits angeordneten Ketten, die über aufnahmeseitige Kettenräder an einer gemeinsamen Achse und über abgabeseitige Kettenräder an einer gemeinsamen Antriebswelle, die unterhalb der Auflöseeinrichtung, seitlich am Abwurfschacht vorbeigeführt sind, um die vollständige Abtragung des Pressballens durch Heranführen der Aufnahmeeinrichtung zu ermöglichen.
Die Zustellung wird dadurch einfach gestaltet und kann leicht steuerbar erfolgen.

Zur Lagerung des Pressballens bildet eine im Bereich zwischen den Ketten, über die Breite der Zuführungseinrichtung eingezogene Auflagefläche in Form einer Förderbahn, über die der Pressballen geschoben wird, eine einfache schonende und störungsarme Lösung.

Für die Aufnahme eines auf einer Palette lagernden Pressballens besteht die Aufnahmeeinrichtung, einfach und robust aufgebaut, aus einem Balken, an dem in der Aufnahmestellung zwei waagerecht liegende Gabeln für die Aufnahme des Pressballens befestigt sind, wobei das präzise Zusammenwirken mit dem Kettenförderer durch Kuppeln mit dessen Ketten erreicht wird.

Die Steuerung des Balkens der Aufnahmeeinrichtung, geschieht vorteilhafter Weise beidseitig mit je einem Steuerarm, die beide in je einer Steuerbahn, mit je zwei voneinander beabstandeten Steuerrollen geführt sind.

Die Steuerung des Balkens der Aufnahmeeinrichtung der Pressballenauflösemaschine geschieht vorteilhaft mechanisch mit Steuerbahnen, die um die aufnahmeseitigen Kettenräder bevorzugt in einer Kreisbahn herumgeführt sind, mit der die Verschwenkung des Preßballens gesteuert wird, an die ein linearer Teil der Steuerbahnen anschließt, für den Vorschub des Pressballens.

In bewährter Weise bestehen die Steuerbahnen aus u-förmigen Führungsschienen bestehen, in denen die Steuerrollen beidseitig geführt sind.

Die Auflagefläche der Fördereinrichtung verläuft vom Boden schräg nach aufwärts, in die Richtung der Ballenauflöseeinrichtung unter zwischen 10 und 45 Grad, günstigerweise von etwa 30 Grad geneigt, damit der Austragkanal über der Aufnahmeöffnung der nachgeordneten Flockungsmaschine für die Weiterverarbeitung liegt.

Die Antriebswelle der abgabeseitigen Kettenräder wird von einem Motor angetrieben, der über einen, vorzugsweise optischen Sensor im Füllschacht der Flockungsmaschine nach dem Füllstand im Füllschacht gesteuert ist, der abgeschaltet wird um den Abtrag des Fasergutes zu unterbrechen und der danach mit einstellbarer Verzögerung auch den Antrieb der Kratzwellen unterbricht, um Leerlauf zu vermeiden.

Bei Beendigung des Abtragevorganges wird der Motor der Antriebswelle des Kettenförderer und der Antrieb der Kratzwellen vom Stellsignal eines, vorzugsweise induktiven oder optischen, Sensors stillgesetzt, sobald der Pressballen abgetragen ist.
Dazu kann in einfacher Weise ein Sensor berührungsfrei verwendet werden, der von einem an dem Balken der Aufnahmeeinrichtung angebrachten Markierungsteil aktiviert wird, wenn das Ende der Abtragungsphase erreicht ist.

Für die Aufnahme des Pressballens ist am unteren Ende der Aufnahmeeinrichtung, an der Aufnahmeseite des Pressballens ein Sensor vorgesehen, der den Motor des Kettenförderers mit Langsamlauf einschaltet und erst nach dem Auflegen des Pressballens auf die Zuführungseinrichtung auf die Arbeitsgeschwindigkeit der Zustellung schaltet und den Antrieb der Kratzwellen einschaltet.

Es ist auch möglich mit einer Steuerung den gesamten Arbeitsablauf, sogar einschließlich der Zufuhr von Pressballen selbsttätig zu steuern und den Arbeitvorgang nach dem Arbeitsergebnis zu regeln.

Ein Ausführungsbeispiel der Erfindung wird nachstehend an Hand der Zeichnung beschrieben.
Es zeigt:
- Fig. 1: die Ballenauflösemaschine in Seitenansicht, im Schnitt, an eine Füllmaschine angebaut, schematisch, bei der Aufnahme eines Pressballens;
- Fig. 2: die Ballenauflösemaschine nach Fig.1 in Seitenansicht, geschnitten, mit aufgenommenen Pressballen, schematisch;
- Fig. 3: die Ballenauflösemaschine nach Fig.1 in Seitenansicht, geschnitten, mit aufgelöstem Pressballen, schematisch;
- Fig. 4: die Ballenauflösemaschine nach Fig.1 in Seitenansicht, geschnitten, mit Überladeeinrichtung, schematisch;
- Fig. 5: Auflöseeinrichtung von der Aufgabeseite her gesehen, schematisch;
- Fig. 6: Auflöseeinrichtung von der Stirnseite her gesehen, mit entfernter Seitenwand, schematisch.

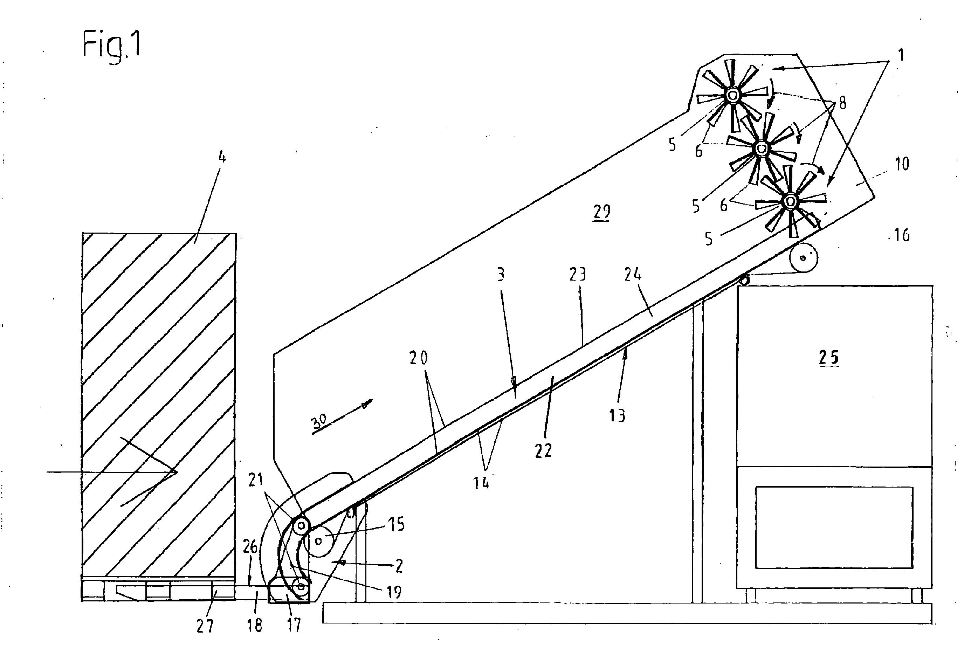

In Fig. 1 ist die Ballenauflösemaschine dargestellt, wie ein Pressballen 4 auf die in waagrechte Beladestellung verbrachten Gabeln 18, die an einem Balken 17 der Aufnahmeeinrichtung 2 angebracht sind, auf einer Palette 27 stehend aufgeschoben ist.

Die Aufnahmeeinrichtung 2 ist am unteren Ende einer Zuführungseinrichtung 3 angeordnet, die eine schräg, flach mit etwa mit 30° ansteigende, oben offene Führung mit Seitenwänden 29 bildet, an deren oberen Ende eine Auflöseeinrichtung 1 angebracht ist.

Die Aufnahmeeinrichtung 2 ist mit Haltewerkzeugen 26 versehen, die aus mehreren Gabeln 18 bestehen, die parallel und in Aufnahmestellung waagerecht ausgerichtet sind und an einem quer angeordneten Balken 17 befestigt sind, der beiderseits Steuerarme 19 trägt, die mit Steuerrollen 21 in einer Steuerbahn 20 aus U-förmigen Führungschienen 22 geführt sind um die Gabeln 18 am unteren Ende der Zuführungseinrichtung 3 nach der Aufnahme von Palette 27 mit dem Pressballen 4 auf die schräg ansteigende Auflagefläche 23 zu legen.

Die Zuführungseinrichtung 3 umfasst einen Kettenförderer 13, dessen Ketten 14 beiderseits der Auflagefläche 23 entlanggeführt sind. Die Ketten 14 laufen über aufnahmeseitige Kettenräder 15 am unteren Ende der Zuführungseinrichtung 3 und an deren oberen Ende, im Bereich der Auflöseeinrichtung 1, über abgabeseitige Kettenräder 16, die dort angetrieben sind und stellen den Pressballen 4 auf der Palette 27, mit den Gabeln 18 des Balkens 17, von den Steuerrollen 21 in dem linearen Teil 24 der Steuerbahn 20 geführt, gegen die Auflöseeinrichtung 1 zu.

Die am oberen Ende der Zuführungseinrichtung 3 angeordnete Auflöseeinrichtung 1 besteht im wesentlichen aus drei im Abstand übereinander parallel, mit der Achsrichtung 9 im rechten Winkel zur Förderrichtung 30 des Pressballens 4, ausgerichteten Kratzwellen 5, die von einem Austragskanal 10 abgedeckt sind, der sich nach unten in eine Flockungsmaschine 25 öffnet.

Die Kratzwellen 5 sind mit Kratzwerkzeugen 6 ausgestattet und sind in der gleichen Drehrichtung 8 angetrieben, wobei die Kratzwerkzeuge 6 vom Pressballen 4 die Papierfasern nach unten zu gerichtet abtragen.

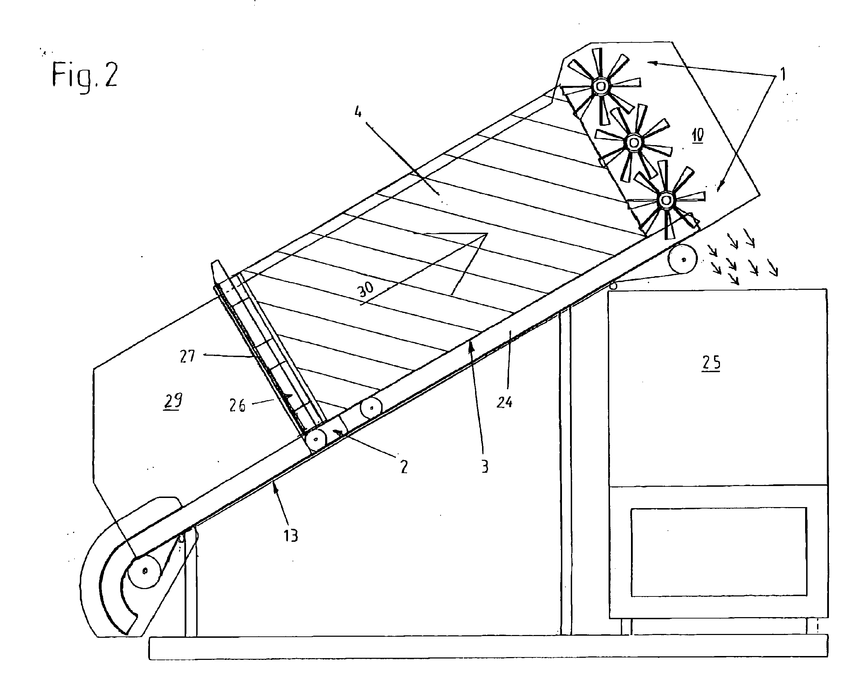

Fig. 2 zeigt den Pressballen 4 auf der Auflagefläche 23 zwischen den Seitenwänden 29 liegend, der auf der Palette 27 von den Haltewerkzeugen 26 der Aufnahmeeinrichtung 2, die mit Steuerrollen 21 in dem linearen Teil 24 der Steuerbahn 20 geführt ist, in Förderrichtung 30 an die Kratzwerkzeuge 6 der Kratzwellen 5 zum Abtragen der Fasern herangeführt wird.

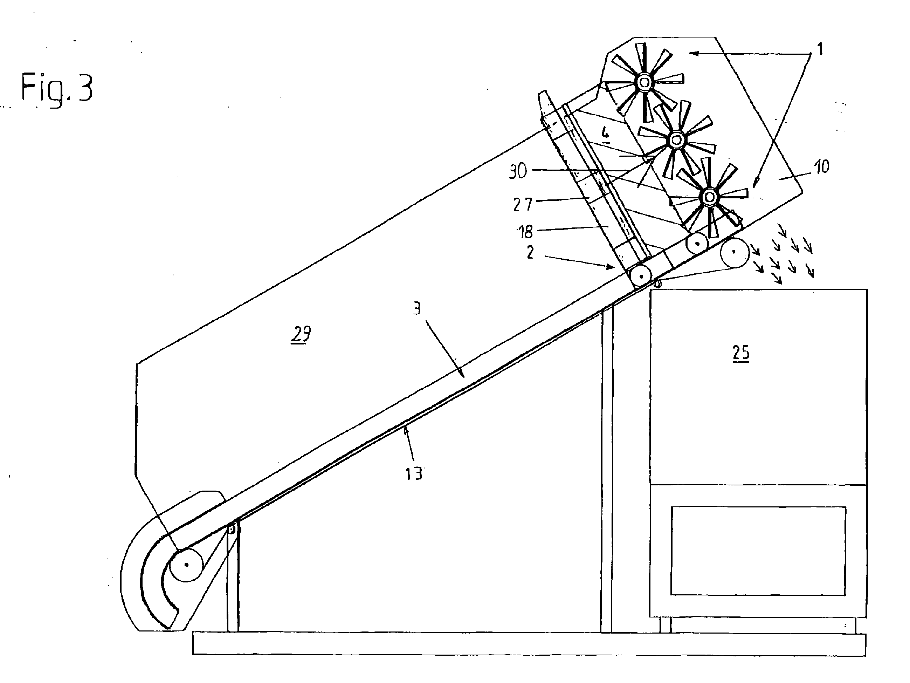

In Fig. 3 ist die die Endphase der Auflösung des Pressballens 4 wiedergegeben, in der dieser, auf der Palette 27 zwischen den Seitenwänden 29 liegend, von der Aufnahmeeinrichtung 2 in Förderrichtung 30 an die Kratzwellen 5 herangeführt und von den Kratzwellen 5 bearbeitet wird, die das aufgelöste Fasergut durch den Austragskanal 10 in die Flockungsmaschine 25 abwerfen.
Der Sensor zum Stillsetzen des Antriebs von Kratzwellen 5 und Kettenförderer 13 ist nicht dargestellt.

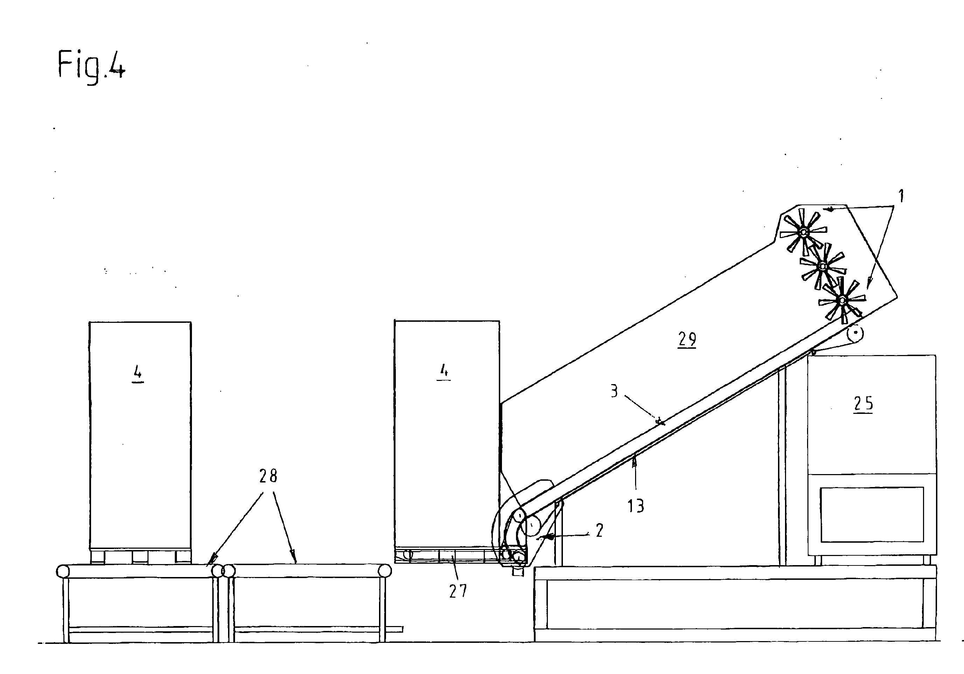

Fig. 4 zeigt die Pressballenauflösemaschine bei der Aufnahme eines Pressballens 4 auf einer Palette 27 mit der Aufnahmeeinrichtung 2, der von einer Rollbahn 28 abgenommen wurde, auf der ein weiterer Pressballen 4 auf einer Palette herangeführt wird. Weiters ist die Zuführungseinrichtung 3 mit dem Kettenförderer 13 und den Seitenwänden 29, sowie die Flockungsmaschine dargestellt.

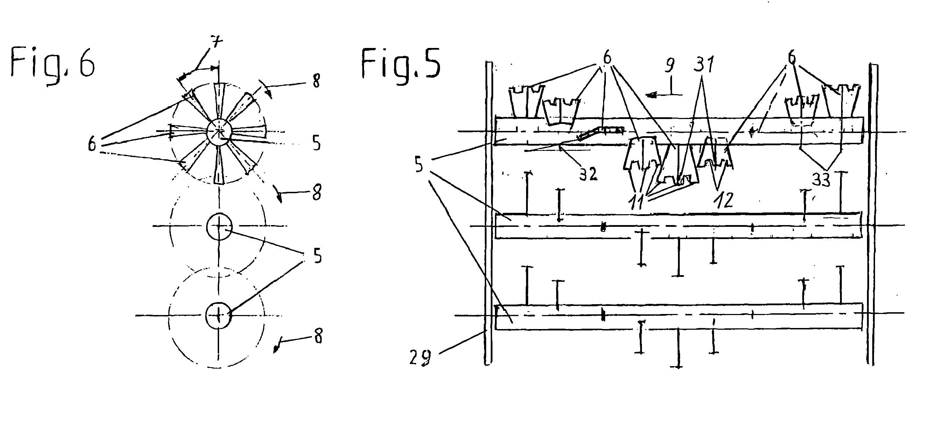

Einzelheiten des Aufbaus der Kratzwellen 5 mit den Kratzwerkzeugen 6 sind in Fig. 5 und Fig. 6 gezeigt.
Dabei ist die Anordnung der drei Kratzwellen 5 zwischen den Seitenwänden 29 ersichtlich, mit der Achsrichtung 9 quer zu diesen.

Die Kratzwerkzeuge 6 sind an der obersten Kratzwelle 5 im einzelnen dargestellt, sonst angedeutet; es ist jedoch zu erkennen, dass sich die Kratzwerkzeuge 6 zwar in Achsrichtung 9 gesehen in der Projektion überdecken, nicht jedoch in der räumlichen Anordnung.

Die Kratzwerkzeuge 6 sind aus Flachmaterial mit im Vergleich zur Länge der Kratzwerkzeuge 6 kurzen Zähnen 11 gestaltet.

Die Kratzwerkzeuge 6 sind gleich lang, außen breit und verjüngen sich zur Wurzel, an der Welle hin, bis zur Hälfte dieser Breite.

An der radial außen liegenden Arbeitskante jedes Kratzwerkzeuges 6 sind jeweils drei Zähne 11 mit breiten Außenkanten angebracht, zwischen denen abgestumpfte Ausnehmungen 12 mit geringer Tiefe von etwa einem Sechstel bis zu einem Viertel der Länge der Kratzwerkzeuge 6 eingearbeitet sind.

Die Kratzwerkzeuge 6 sind in der Mitte an einer Längskante 31 um einem Winkel von etwa zehn Grad zueinander, mit der Längskante 31 gegen die Drehrichtung 8 weisend, abgewinkelt und von der Mitte der Kratzwelle 5 zur Seitenwand 29 etwa um den gleichen Winkel 32, und insbesondere zehn Grad, zur Wellenachse schräg angestellt angebracht, die Förderung nach beiden Seiten nach innen zu begünstigend.

Die Kratzwerkzeuge 6 einer Kratzwelle 5 sind in Achsrichtung 9 gesehen, in Drehrichtung 8 gewendelt zu acht oder neun Stück, jeweils um 45 Grad zueinander versetzt, angebracht.

### Bezugszeichenliste

- 1: Auflöseinrichtung
- 2: Aufnahmeeinrichtung
- 3: Zuführungseinrichtung
- 4: Pressballen
- 5: Kratzwelle
- 6: Kratzwerkzeug der Aufnahmeeinrichtung 2
- 7: Versatzschritt des Kratzwerkzeuges 6
- 8: Drehrichtung der Kratzwelle 5
- 9: Achsrichtung der Kratzwelle 5
- 10: Austragskanal
- 11: sich verjüngender Zahn des Kratzwerkzeuges 6
- 12: abgestumpfte Ausnehmung zwischen Zähnen 11
- 13: Kettenförderer
- 14: Kette des Kettenförderers 13
- 15: aufnahmeseitiges Kettenrad des Kettenförderers 13
- 16: abgabeseitiges Kettenrad des Kettenförderers 13
- 17: Balken der Aufnahmeeinrichtung 2
- 18: Gabel des Balkens 17
- 19: Steuerarm des Balkens 17
- 20: Steuerbahn für den Steuerarm 19
- 21: Steuerrolle des Steuerarmes 19
- 22: u-förmige Führungsschiene der Steuerbahn 20
- 23: Auflagefläche als Förderbahn der Zuführungseinrichtung 3
- 24: linearer Teil der Steuerbahn 20
- 25: Flockungsmaschine
- 26: Haltewerkzeug der Aufnahmeeinrichtung 2
- 27: Palette für Pressballen 4
- 28: Seitenwand der Zuführungseinrichtung 3
- 29: Rollbahn für die Pressballen 4
- 30: Förderrichtung des Pressballens 4
- 31: Längskante des Kratzwerkzeuges 6
- 32: Anstellwinkel des Kratzwerkzeuges 6 zur Achse der Kratzwelle 5
- 33: Abstand der Kratzwerkzeuge 6 voneinander auf der Kratzwelle 5

## Patentansprüche

1. Pressballenauflösemaschine mit einer Auflöseeinrichtung (1) für einen Pressballen (4), mit Abtrageelementen, bestehend aus einem oder aus mehreren insbesondere aus drei, Kratzwerkzeuge (6) tragenden, angetriebenen Zylindern oder Schnecken oder Kratzwellen (5), die in Abständen übereinander, waagerecht und parallel zueinander angeordnet und im rechten Winkel zur Förderrichtung (30) des Pressballens (4) ausgerichtet, den stirnseitigen Querschnitt des Pressballens (4) überdeckend ausgebildet sind und deren Kratzwerkzeuge (6) regelmäßig über Zylinder, Schnecke oder Kratzwelle (5) verteilt angebracht, in Achsrichtung (9) in regelmäßigen Versatzschritten (7) in Drehrichtung (8) angeordnet sind und aus einer Aufnahmeeinrichtung (2) mit Haltewerkzeugen (26) für einen Pressballen (4) und einer dazwischen angeordneten Zuführungseinrichtung (3) mit einer Auflagefläche (23) als Förderbahn für die liegende Förderung eines Pressballens (4) besteht, gegen die der von den Haltewerkzeugen (26) der Aufnahmeeinrichtung (2) jeweils erfasste Pressballen (4) auf der Zuführungseinrichtung (3) zugestellt wird **dadurch gekennzeichnet, dass** die Zylinder, Schnecken oder Kratzwellen (5) das von den mit Zähnen vesehenen Kratzwerkzeugen (6) abgetrennte Fasergut des Pressballens (4), an dessen Abtragefront nach unten fördernd, in einen Austragskanal (10) abwerfen, wobei die Kratzwerkzeuge (6) mit den Außenbereichen ihrer Umfangsbahnen einander in Achsrichtung (9) gesehen, in Radialrichtung wenigstens etwas über den Bereich der Zähne (11), überdecken und benachbarte Kratzwerkzeuge (6) einer Kratzwelle (5) in Achsrichtung (9) einen Abstand (33) aufweisen, bei dem diese nach außen zu aneinander etwa anschließend, nicht überdeckend angeordnet sind.

2. Pressballenauflösemaschine nach dem vorhergehenden Anspruch, **dadurch gekennzeichnet, dass** die Kratzwerkzeuge (6) jeder Kratzwelle (5), beiderseits jeweils von den Seitenwänden (29) bis zur Mitte hin, um einen sich zur Mitte hin öffnenden Winkel (32) von etwa 5 bis 10 Grad zur Achsrichtung (9) der Kratzwelle (5) geneigt angestellt sind.

3. Pressballenauflösemaschine nach Anspruch 1 oder 2, **dadurch gekennzeichnet, dass** die Kratzwerkzeuge (6) jeder Kratzwelle (5) wenigstens einen vollständigen Wendelgang um diese über deren Länge beschreibend, mit acht oder neun Kratzwerkzeugen (6) den Wendelgang bilden.

4. Pressballenauflösemaschine nach einem der Ansprüche 1 bis 3, **dadurch gekennzeichnet, dass** die Kratzwellen (5) mit Kratzwerkzeugen (6) versehen sind, die in Achsrichtung (9) in regelmäßigen Versatzschritten (7) in Drehrichtung (8) von etwa 45 Winkelgraden, angeordnet sind.

5. Pressballenauflösemaschine nach einem der Ansprüche 1 bis 4, **dadurch gekennzeichnet, dass** die zu ihrer Wurzel hin sich verjüngenden Kratzwerkzeuge (6) mit mehreren, vorzugsweise drei, in Bezug auf die Länge der Kratzwerkzeuge (6) kurzen, sich schwach verjüngenden, insbesonders außen abgestumpften, Zähnen (11) versehen sind, zwischen denen sich nach innen zu abgestumpfte oder gerundete Ausnehmungen (12) befinden.

6. Pressballenauflösemaschine nach einem der Ansprüche 1 bis 5, **dadurch gekennzeichnet, dass** die Kratzwerkzeuge (6) ihrer Länge nach, an einer mittigen Längskante (31), unter einem Winkel von etwa 10 bis 45 Grad, vorzugsweise von etwa 15 Grad, in Drehrichtung (8) konkav abgewinkelt oder gebogen sind.

7. Pressballenauflösemaschine nach Anspruch 1, **dadurch gekennzeichnet, dass** die Zuführungseinrichtung (3) für den Pressballen (4) aus einem Kettenförderer (13) mit beiderseits angeordneten Ketten (14), die über aufnahmeseitige Kettenräder (15) an einer gemeinsamen Achse und über abgabeseitige Kettenräder (16) an einer gemeinsamen Antriebswelle, unterhalb der Auflöseeinrichtung (1) angeordnet, geführt sind, wobei im Bereich zwischen den Ketten (14), über die Breite der Zuführungseinrichtung (3), die Auflagefläche (23) als Förderbahn eingezogen ist.

8. Pressballenauflösemaschine nach Anspruch 1 oder 7, **dadurch gekennzeichnet, dass** die Aufnahmeeinrichtung (2) aus einem Balken (17) besteht an dem zwei, in der Aufnahmestellung, waagerecht liegende Gabeln (18), für die Aufnahme des auf einer Palette (27) lagernden Pressballens (4), befestigt sind und der, vorzugsweise beiderseits, mit den Ketten (14) des Kettenförderers 13) gekuppelt ist,

9. Pressballenauflösemaschine nach Anspruch 1, 7 oder 8, **dadurch gekennzeichnet, dass** der Balken (17) der Aufnahmeeinrichtung (2), vorzugsweise beidseitig, mit je einem Steuerarm (19) versehen ist, der in je einer Steuerbahn (20), insbesondere mit je zwei voneinander beabstandeten Steuerrollen (21) geführt ist.

10. Pressballenauflösemaschine nach dem vorhergehenden Anspruch, **dadurch gekennzeichnet, dass** die Steuerbahn(en) (20) um die aufnahmeseitigen Kettenräder (15) etwa in einer Kreisbahn herumgeführt ist(sind), mit der die Verschwenkung des Pressballens (4) gesteuert wird und an die ein linearer Teil (24) der Steuerbahn(en) (20) anschließt.

11. Pressballenauflösemaschine nach einem der Ansprüche 9 oder 10, **dadurch gekennzeichnet, dass** die Steuerbahnen (20) aus u-förmigen Führungsschienen (22) bestehen, in denen die Steuerrollen (21) geführt sind.

12. Pressballenauflösemaschine nach einem der vorhergehenden Ansprüche, **dadurch gekennzeichnet, dass** die Auflagefläche (23) der Fördereinrichtung (3) flach nach aufwärts mit etwa 10 bis 40 Grad, vorzugsweise mit 30 Grad, in Richtung der Ballenauflöseeinrichtung (1) geneigt angeordnet ist, wobei der Austragkanal (10) über der Aufnahmeöffnung einer Flockungsmaschine (25) liegt.

13. Pressballenauflösemaschine nach einem der vorhergehenden Ansprüche, **dadurch gekennzeichnet, dass** die Antriebswelle der abgabeseitigen Kettenräder (16) von einem Motor angetrieben ist, der über einen Sensor im Füllschacht der Flockungsmaschine (25) nach dem Füllstand gesteuert ist und nach diesem auch den Antrieb für die Kratzwellen (5) abschaltet oder vor diesem einschaltet.

14. Pressballenauflösemaschine nach einem der vorhergehenden Ansprüche, **dadurch gekennzeichnet, dass** der Motor der Antriebswelle der abgabeseitigen Kettenräder (16) und der Antrieb der Kratzwellen (5) vom Stellsignal eines, vorzugsweise induktiven oder optischen, Sensors stillgesetzt wird, der von einer an dem Balken (17) der Aufnahmeeinrichtung (2) angebrachten Markierungsteil aktiviert wird, sobald der Pressballen (4) abgetragen ist.

15. Pressballenauflösemaschine nach einem der vorhergehenden Ansprüche, **dadurch gekennzeichnet, dass** der Motor der Antriebswelle der abgabeseitigen Kettenräder (16) mit einem, im Bereich der Aufnahmeeinrichtung (1), unten an der Aufnahmeseite des Pressballens (4) angeordneten, weiteren Sensor beim Einschalten der Maschine auf Langsamlauf schaltet, und nach Auflegen des Pressballens (4) auf die Auflagefläche (23) auf die arbeitsgemäße Zustellgeschwindigkeit des Kettenförderers (13) der Zuführungseinrichtung (2) schaltet und nach Schalten des Sensors an der Auflöseeinrichtung (1) den Antrieb der Kratzwellen (5) einschaltet.
